# EUROPEAN PATENT SPECIFICATION

(11) **EP 4 039 768 B1**
(45) Date of publication and mention of the grant of the patent: **08.10.2025**
(21) Application number: 20873218.0
(22) Date of filing: 10.08.2020
(51) Int. Cl.: C09K 5/04, C10M 171/00

(54) **COMPOSITION OF FLUOROOLEFIN AND FLUOROALKANE**
ZUSAMMENSETZUNG AUS FLUOROLEFIN UND FLUORALKAN
COMPOSITION DE FLUOROOLÉFINE ET DE FLUOROALCANE

(30) Priority: 30.09.2019 CN 201910947435
(43) Date of publication of application: 10.08.2022
(73) Proprietor: Zhejiang Quhua Fluor-Chemistry Co., Ltd., Quzhou, Zhejiang 324004 (CN)
(72) Inventor: HONG, Jiangyong, Quzhou, Zhejiang 324000 (CN); YANG, Bo, Quzhou, Zhejiang 324000 (CN); ZHANG, Yan, Quzhou, Zhejiang 324000 (CN); SHI, Haojin, Quzhou, Zhejiang 324004 (CN); ZHAO, Yang, Quzhou, Zhejiang 324000 (CN)
(74) Representative: Becker, Eberhard
(86) International application number: PCT/CN2020/000180
(87) International publication number: WO 2021/062963

(56) References cited:
- CN-A- 102 947 410
- CN-A- 104 093 811
- CN-A- 104 583 355
- CN-A- 105 765 050
- CN-A- 110 699 042
- US-A1- 2011 023 507

## Description

### BACKGROUND

### Technical Field

The present disclosure relates to a fluorohydrocarbon composition, in particular to a composition of fluoroolefin and fluoroalkane.

### Description of Related Art

In recent years, the world has paid more and more attention to the potential harm to the earth's atmosphere and climate. Due to the ozone depletion characteristics associated with many of these compounds, chlorine-containing compositions used as refrigerants in air conditioning and refrigeration systems, such as chlorofluorocarbons (CFC), hydrochlorofluorocarbons (HCFC) and its analogues, have begun to be reduced and phased out. Therefore, there has been an increasing need for novel fluorocarbon and hydrofluorocarbon compounds and compositions that can provide alternatives for refrigeration and heat pump applications. For example, it has become desirable to improve chlorine-containing refrigeration systems by replacing chlorine-containing refrigerants with non-chlorine refrigerant compounds that do not deplete the ozone layer, such as hydrofluorocarbons (HFCs).

At present, the substitute for refrigerant CFC-12 on the market is mainly 1,1,1,2-tetrafluoroethane (HFC-134a). Although HFC-134a has good thermal performance and ODP (Ozone Depletion Potential) of zero and is non-flammable, its GWP (Global Warming Potential) is 1370, which does not meet the current global energy saving and emission reduction requirements, so it is urgently desired to research and develop a novel refrigerant with more outstanding environmental performance and thermal performance not worse than HFC-134a.

Although the third-generation refrigerant represented by HFC has the ODP value of zero and no damaging effect on the ozone layer, it has a high GWP value and is listed as a greenhouse gas by the Kyoto Protocol. The European Parliament passed F-gas regulations to restrict the use of high-GWP fluorine-containing gases, various countries reached an agreement on a timetable for HFCs reduction in the Kigali Amendment, and the international community reached a consensus in the field of climate change.

2,3,3,3-tetrafluoropropene (HFO-1234yf) has good thermal performance, and as a single refrigerant, it has excellent environmental parameters. HFO-1234yf has the GWP of 4 and lower Life Cycle Climate Performance (LCCP) than HFC-134a, its atmospheric decomposition products are the same as those of HFC-134a. Under the same automotive air conditioning conditions, its refrigeration coefficient is lower than that of HFC-134a, and its cooling capacity per unit volume is also low. However, the exhaust temperature of HFO-1234yf is very low and it also has a large saturated liquid specific volume. If HFO-1234yf is used to substitute the HFC-134a refrigerant, automobile manufacturers can continue to use the original MAC (Mobile Air-Conditioning) system. Therefore, HFO-1234yf is considered to be a potential new generation of automobile refrigerant substitutes. It has been accepted by automobile manufacturers in Western Europe. Although the GWP and LCCP of HFO-1234yf have obvious environmental advantages as compared with other refrigerants that replace HFC-134a, it has low flammability and may cause fire hazards.

In addition, when a refrigerant composition is used in a refrigeration system, it is also necessary to consider the compatibility of the refrigerant composition and a lubricant. In order for the refrigerating fluid-lubricant combination to work at an effective ideal level in compression refrigeration, air conditioning and/or heat pump systems, the lubricant should be fully dissolved in refrigerating liquid at various operating temperatures. The solubility reduces the viscosity of the lubricant and makes the lubricant easier to flow throughout the system. In the absence of such solubility, lubricants tend to accumulate in the evaporator coils of refrigeration, air conditioning, or heat pump systems and other parts of the system, thus reducing system efficiency. When the composition is used in a refrigeration system, there must be enough lubricant to return to a compressor of the system so that the compressor is lubricated. The suitability of the lubricant is determined by the characteristics of the refrigerant/lubricant and the characteristics of the system itself. Lubricants currently used in HFC refrigeration systems and HCFC refrigerant refrigeration systems include mineral oil, silicone oil, polyalkylbenzene, polyalkylene glycol, polyalkylene glycol ester, polyol ester, and polyvinyl ether. For HFC refrigeration systems, polyalkylene glycol, polyalkylene glycol ester, polyvinyl ether and polyol ester are usually preferably used as lubricants. For HCFC refrigeration systems, mineral oil or polyalkylbenzenes are usually used as lubricants.

Any potential substitute refrigerant must also have those characteristics found in many of the most widely used fluids, such as excellent heat transfer characteristics, chemical stability, low or non-toxicity, non-flammability and lubricant compatibility, etc.

Based on the above concepts, researchers have developed a variety of HFO-1234yf-based compositions, which can improve the refrigeration effect and compatibility with lubricating oil by adding other components and also can combine the advantages of all the components to minimize unfavorable factors.

For example, Chinese Patent Publication No. CN101851490A discloses a refrigerant composition that can replace HFC-134a, and the refrigerant composition includes 2,3,3,3 tetrafluoropropene, trans-1,3,3,3-tetrafluoropropene (HFO-1234ze (E)) and 1,1 difluoroethane (HFC152a).

For example, Chinese Patent Publication No. CN101864277A discloses a mixture of 2,3,3,3 tetrafluoropropene, 1,1 difluoroethane and dimethyl ether (DME).

For example, Chinese Patent Publication No. CN102066518A discloses a mixture of 2,3,3,3 tetrafluoropropene, 1,1,1,2 tetrafluoroethane and 1,1 difluoroethane.

For example, Chinese Patent Publication No. CN102083935A discloses a mixture of 1,1,1,2 tetrafluoroethane and 2,3,3,3 tetrafluoropropene.

For example, Chinese Patent Publication No. CN104403637A discloses a tetrafluoropropylene composition with good lubricant compatibility and a preparation method thereof. The tetrafluoropropylene composition includes, by weight, 0.4 to 15 parts of fluorine-modified Ni-containing hydrotalcite, 0.002-0.25 part of a silane coupling agent, 49.5-985 parts of a lubricant, 4000-90000 parts of 2,3,3,3-tetrafluoropropene, 0-60000 parts of fluoroethane, 0-15000 parts of 1,1-difluoroethane, 0-5000 parts of isobutane, 0.8-1 part of bis(trifluoromethylsulfonyl) imidated 3-methyl-1-propylpyridine.

The refrigerant compositions disclosed in the above patents have disadvantages such as high GWP, or inability to directly charge and apply to refrigeration systems, or high flammability, or inability to use mineral oil. Therefore, it is desired to develop a novel refrigerant with better refrigeration performance, better compatibility with existing systems, and better environment-friendly performance.
D1 (US 2011/0023507A1) disclosed a heat transfer composition, comprising: (a) from about 30% to about 65% by weight of HFC-134a; (b) from about 0% to about 70% by weight of HFO-1234ze, preferably trans-HFO-1234ze; and (c) from about 0% to about 70% by weight of HFO-1234yf, provided that the amount of HFO-1234ze plus HFO-1234yf in the composition is at least about 35% by weight, with the weight percent being based on the total of the components (a)-(c) in the composition.
D2 (CN 104583355A) disclosed a refrigeration composition, comprising: (A) a refrigerant, wherein the refrigerant component consists essentially of: (1) at least one refrigerant having an OEL less than 400 consisting essentially of HFO-1234yf; and (2) a combination of refrigerants each having an OEL greater than 400, consisting essentially of: (i) HFC-32; and (ii) HFO-trans-1234ze.
D3 (CN 104093811A) disclosed a refrigeration composition, comprising: (a) about 10 wt% to about 35 wt% HFC-32; (b) about 10 wt% to about 35 wt% HFC-125; (c) greater than 0 wt% to about 30 wt% HFO-1234ze; (d) about 10 wt% to about 35 wt% HFC-134a, (e) optionally but preferably greater than about 0 wt% to about 30 wt% HFO-1234yf, and optionally (f) up to about 10 wt% CF₃I and/or up to about 5 wt% HFCO-1233ze, from about 0 wt% to about 30 wt% HFO-1234yf.
D4 (CN 105765050A) disclosed a heat transfer composition, comprising: difluoromethane (HFC-32), pentafluoroethane (HFC-125), 1,3,3,3-tetrafluoropropene (HFO-1234ze), and 1,1,2,2-tetrafluoroethane (HFC-134).
D5 (CN 102947410A) disclosed a refrigeration composition, comprising: about 1% to 97% difluoromethane (R-32), about 1% to 97% pentafluoroethane (R-125), about 1% to 97% of 2,3,3,3-tetrafluoropropene (R-1234yf) and about 1% to 97% of 1,1,1,2-tetrafluoroethane (R-134a).

### SUMMARY

The technical problem to be solved by the present disclosure is to provide a composition of fluoroolefin and fluoroalkane which is environmentally friendly, has good refrigeration effect, good lubricant compatibility and low GWP.

In order to solve the above technical problem, the present disclosure is achieved through the following technical solution: a composition of fluoroolefin and fluoroalkane, including, by weight, 70 to 80 parts of 2,3,3,3-tetrafluoropropene, 10 to 20 parts of trans-1,3,3,3-tetrafluoropropene, 5-10 parts of 1,1,1,2-tetrafluoroethane, and 2 to 5 parts of difluoromethane.

As a preferred embodiment of the present disclosure, the composition of fluoroolefin and fluoroalkane of the present disclosure further includes a lubricant including one or two of mineral oil, silicone oil, polyol ester, polyalkylene glycol, and polyalkylbenzene.

As a preferred embodiment of the present disclosure, the composition of fluoroolefin and fluoroalkane of the present disclosure has a GWP not more than 150.

The present disclosure further discloses a preparation method of the composition fluoroolefin and fluoroalkane, that is, physically mixing the above components in a liquid phase state according to their weight percentages, to obtain the composition of fluoroolefin and fluoroalkane.

The most commonly used liquefied gas propellants are hydrocarbons such as butane, isobutane and propane. Dimethyl ether and HFC-152a are also used separately or in combination with hydrocarbon propellants. However, these liquefied gas propellants are highly flammable, and their incorporation into aerosol formulations will generally produce flammable aerosol products. Based on the non-flammability of aerosol products, the present disclosure preferably a composition containing HFO-1234yf, which is used in medicinal aerosols including spray cleaners and certain industrial aerosol products.

The concept of the present disclosure mainly focuses on HFO-1234yf and improves the refrigeration effect and the compatibility with lubricating oil and reduces the GWP value and flammability by adding other components. The composition of fluoroolefin and fluoroalkane of the present disclosure can be used as a refrigerant and aerosol propellant to replace HFC-134a.

The HFO-1234yf in the present disclosure has good thermal performance, and as a single refrigerant, it has excellent environmental parameters. HFO-1234yf has the GWP of 4 and lower LCCP than HFC-134a, its atmospheric decomposition products are the same as those of HFC-134a. Under the same automotive air conditioning conditions, the refrigeration coefficient of HFO-1234yf is lower than that of HFC-134a, and its cooling capacity per unit volume is also low. However, the exhaust temperature of HFO-1234yf is very low and it also has a large saturated liquid specific volume.

The trans-1,3,3,3-tetrafluoropropene (HFO-1234ze(E)) of the present disclosure has excellent environmental parameters, with the GWP of 6 and the LCCP lower than HFC-134a, and its atmospheric decomposition products are the same as those of HFC-134a, and moreover its system performance is better than that of HFC-134a. Therefore, HFO-1234ze(E) is considered to be the most potential substitute for HFC-134a in refrigerant and aerosol propellant industries and the like.

The composition of fluoroalkene and fluoroalkane of the present disclosure is a mixture of 2,3,3,3-tetrafluoropropene, trans-1,3,3,3-tetrafluoropropene, 1,1,1,2-tetrafluoroethane and difluoromethane, which combine the advantages of each component and minimize unfavorable factors. The composition of the present disclosure has the advantages of low GWP, good environmentally friendliness, good refrigeration effect, and good lubricant compatibility.

The raw materials in the present disclosure are all commercially available.

Compared with the prior art, the present disclosure has the following advantages.
1. With an ODP of 0 and a GWP less than 150, the composition of fluoroolefin and fluoroalkane in the present disclosure has excellent environmental performance.
2. The composition of fluoroolefin and fluoroalkane in the present disclosure has a low discharge temperature, thereby prolonging the service life of a compressor and improving the reliability of the refrigeration equipment.
3. The composition of fluoroolefin and fluoroalkane in the present disclosure has good compatibility with lubricating oil and has higher stability.
4. The composition of fluoroolefin and fluoroalkane in the present disclosure can directly replace HFC-134a without changing the compressor.
5. The composition of fluoroolefin and fluoroalkane in the present disclosure has good flame retardancy.

### DESCRIPTION OF THE EMBODIMENTS

The present disclosure is further illustrated by the following specific embodiments, but the present disclosure is not limited to the embodiments described.

### Embodiments 1-5

2,3,3,3-tetrafluoropropene, trans-1,3,3,3-tetrafluoropropene, 1,1,1,2-tetrafluoroethane, difluoromethane were mixed, in parts by weight, in a liquid phase state, to obtain a composition. The composition is shown in Table 1.

**Table 1 Compositions of the composition obtained in Examples 1 to 5**

| Example | Composition number | HFO-1234yf | HFO-1234ze (E) | HFC-134a | HFC-32 |
|---|---|---|---|---|---|
| 1 | 1# | 70 | 20 | 5 | 5 |
| 2 | 2# | 80 | 10 | 8 | 2 |
| 3 | 3# | 70 | 15 | 10 | 5 |
| 4 | 4# | 75 | 17 | 5 | 3 |
| 5 | 5# | 80 | 12 | 5 | 3 |

| | | | | | |
|---|---|---|---|---|---|
| Note: the unit is kg. | | | | | |

### Performance test

### (1) Testing on relative COP, relative capacity, discharge temperature

The inlet temperature of the compressor was set to 50°C, the COP value, relative capacity and discharge temperature of the test substance were tested within the temperature ranges of the condenser and an evaporator. The results are shown in Table 2.

**Table 2 Performance of the compositions obtained in Examples 1-5**

| Test substance | Relative COP | Relative capacity | Discharge temperature |
|---|---|---|---|
| HFC-134a | 1.00 | 1.00 | 175 |
| HFO-1234yf | 0.98 | 1.10 | 168 |
| HFO-1234ze (E) | 1.04 | 0.70 | 165 |
| 1# composite | 1.03 | 1.08 | 171 |
| 2# composite | 1.05 | 1.12 | 166 |
| 3# composite | 1.08 | 1.11 | 168 |
| 4# composite | 1.02 | 1.07 | 169 |
| 5# composite | 1.10 | 1.02 | 163 |

It can be seen from Table 2 that the composition of the present disclosure has higher energy efficiency than HFC-134a, and the compressor using the composition of the present disclosure will produce a lower discharge temperature than HFC-134a.

### (2) Miscibility test

The tested lubricants were mineral oil (C3), silicone oil, alkylbenzene (Zerol 150), polyalkylene glycol (PAG) and polyol ester. During the test, two of the lubricants were selected and mixed in a dose of 50wt% each, and then mixed with the test substance.

A small compressor was used and the test substance/lubricant composition was put in the compressor to test the compatibility of the test substance/lubricant composition with a lubricant when it came into contact with a metal used in the refrigeration system at 40 °C. It was determined that the test substance/lubricant was miscible in all test ratios over the entire temperature range. The test substance/lubricant compositions were as follows:
(a) HFO-1234ze and mineral oil/silicone oil
(b) HFO-1234yf and polyalkylene glycol/silicone oil
(c) 1# composition and alkylbenzene/silicone oil
(d) 2# composition and polyalkylene glycol/polyol ester
(e) 3# composition and polyalkylene glycol/alkylbenzene
(f) 4# composition and silicone oil/alkylbenzene

During the test, it was found that the composition of the present disclosure had higher stability when it came into contact with the lubricant in the compressor refrigeration system.

### (3) Flammability test

Flammability test: The flammability test was carried out in accordance with the American ASTM-E681-01 standard, where LFL refers to the lower limit of the flammability limit; the larger the LFL value, the lower the flammability. The results are shown in Table 3.

**Table 3 Combustibility comparison of compositions**

| Test substance | 1# | 2# | 3# | 4# | 5# | HFO-1234yf |
|---|---|---|---|---|---|---|
| LFL value (Volume %) | 6.74 | 6.35 | 6.17 | 6.43 | 6.28 | 6.2 |

## Claims

1. A composition of fluoroolefin and fluoroalkane, **characterized in that**, comprising, by weight, 70 to 80 parts of 2,3,3,3-tetrafluoropropene, 10 to 20 parts of trans-1,3,3,3-tetrafluoropropene, 5-10 parts of 1,1,1,2-tetrafluoroethane, and 2 to 5 parts of difluoromethane.

2. The composition of fluoroolefin and fluoroalkane according to claim 1, **characterized in that**, further including a lubricant, the lubricant including one or two of mineral oil, silicone oil, polyol ester, polyalkylene glycol, and polyalkylbenzene.

3. The composition of fluoroolefin and fluoroalkane according to claim 1, **characterized in that**, having a GWP (Global Warming Potential) not greater than 150.

4. A preparation method of the composition of fluoroolefin and fluoroalkane according to claim 1, **characterized in that**, physically mixing the components in a liquid phase state according to their weight percentages, to obtain the composition of fluoroolefin and fluoroalkane.

## Patentansprüche

1. Zusammensetzung von Fluorolefin und Fluoralkan, **dadurch gekennzeichnet, dass** sie, auf das Gewicht bezogen, 70 bis 80 Teile 2,3,3,3-Tetrafluorpropen, 10 bis 20 Teile Trans-1,3,3,3-tetrafluorpropen, 5-10 Teile 1,1,1,2-Tetrafluorethan und 2 bis 5 Teile Difluormethan umfasst.

2. Zusammensetzung von Fluorolefin und Fluoralkan nach Anspruch 1, **dadurch gekennzeichnet, dass** sie ferner ein Gleitmittel umfasst, wobei das Gleitmittel eines oder zwei von Mineralöl, Siliconöl, Polyolester, Polyalkylenglykol und Polyalkylbenzol umfasst.

3. Zusammensetzung von Fluorolefin und Fluoralkan nach Anspruch 1, **dadurch gekennzeichnet, dass** sie ein GWP (globales Wärmungspotential) von nicht mehr als 150 aufweist.

4. Herstellungsverfahren für die Zusammensetzung von Fluorolefin und Fluoralkan nach Anspruch 1, **gekennzeichnet durch** physikalisches Mischen der Komponenten in einem Flüssigphasenzustand ihren Gewichtsprozentsätzen entsprechend, um die Zusammensetzung von Fluorolefin und Fluoralkan zu erhalten.

## Revendications

1. Composition de fluorooléfine et de fluoroalcane, **caractérisée en ce que**, comprenant, en poids, 70 à 80 parties de 2,3,3,3-tétrafluoropropène, 10 à 20 parties de trans-1,3,3,3-tétrafluoropropène, 5 à 10 parties de 1,1,1,2-tétrafluoroéthane et 2 à 5 parties de difluorométhane.

2. Composition de fluorooléfine et de fluoroalcane selon la revendication 1, carctérisée en ce que, comprenant en outre un lubrifiant, le lubrifiant comprenant un ou deux d'une huile minérale, d'une huile de silicone, de polyol ester, de polyalkylène glycol et de polyalkylbenzène.

3. Composition de fluorooléfine et de fluoroalcane selon la revendication 1, **caractérisée en ce que**, ayant un GWP (potentiel de chauffage global) de pas plus de 150.

4. Procédé de préparation de la composition de fluorooléfine et de fluoroalcane selon la revendication 1, **caractérisé en ce que**, le mélange physique des composants dans un état de phase liquide selon leurs pourcentages en poids, pour obtenir la composition de fluorooléfine et de fluoroalcane.
